# EUROPEAN PATENT SPECIFICATION

(11) **EP 2 773 152 B1**
(45) Date of publication and mention of the grant of the patent: **19.08.2015**
(21) Application number: 13157035.0
(22) Date of filing: 27.02.2013
(51) Int. Cl.: H04W 48/18, H04W 88/06, H04W 72/08

(54) **Access point and channel selection in a wireless network for reduced RF interference**
Zugriffspunkt- und Kanalauswahl in einem drahtlosen Netzwerk für verringerte HF-Interferenz
Point d'accès et sélection de canal dans un réseau sans fil permettant de réduire une interférence RF

(43) Date of publication of application: 03.09.2014
(73) Proprietor: BlackBerry Limited, Waterloo, ON N2K 0A7 (CA)
(72) Inventor: Smadi, Mohammed Nawaf, Waterloo, Ontario N2L 3W8 (CA)
(74) Representative: Bryn-Jacobsen, Caelia

(56) References cited:
- US-A1- 2010 029 215
- US-A1- 2010 083 121
- US-A1- 2012 033 645

## Description

### BACKGROUND

### Field Of The Technology

The present disclosure relates generally to mobile communication devices configured for radio frequency (RF) communications, and more particularly to techniques for reducing RF interference for such communications.

### Description Of The Related Art

A mobile communication device, such as a smartphone or cellular telephone, may be configured for radio frequency (RF) communications in a wireless communication network. For example, such a device may communicate via access points (APs) of a wireless local area network (WLAN) in accordance with IEEE 802.11 technology or the like. Such a device may be additionally configured for RF communications with use of a cellular technology, for example, in accordance with Long Term Evolution (LTE) radio technology.

The RF bands assigned for use with these technologies are adjacent one another, where out-of-band RF interference is likely to result. On the other hand, in other environments, harmonic interference (e.g. when a harmonic frequency of the primary signal causes interference in a different RF band) may be an issue, whether or not the RF bands are adjacent one another.

There is a need for ensuring that communications are not hindered due to RF interference from use of co-located radios (e.g. IEEE 802.11 and LTE radios) in these and similar environments.

US 2010 029215 relates to a method for controlling a number of simultaneous radio connections in a communication device is presented. The control of a number of simultaneous radio connections is carried out in the communication device. Parameters of the radio connections are controlled such that interference between the radio connections is minimized.

US 2010 083121 relates to, among other things, novel techniques to evaluate and qualify multiple networking options. A device contains multiple network connectivity options, including but not limited to various wireless and wired technologies such as Wi-Fi, 3G, WiMAX, LTE, Ethernet, Bluetooth, UWB, WHDMI, etc. Each connectivity option can be evaluation and pre-qualified prior to the user selecting that mode of communication. This evaluation process takes into account both lower-layer information such as signal strength, bit error rates, SNR, interference, etc. but also network-layer information such as IP connectivity, and end-to-end path performance.

US 2012 033645 relates to a method of wireless communication includes determining a frame offset between communications of a first communication resource (e.g., an LTE radio) and communications of a second communication resource (e.g., a Bluetooth or WLAN radio). The method also includes determining potential time slot configurations for the communications of the second communication resource. A time slot configuration is selected from the determined potential time slot configurations, to reduce degradation of the first communication resource due to conflicting time slots between the first communication resource and the second communication resource, based on the determined frame offset. The selection may be based on the determined frame offset.

The present invention is set out in the independent claims, with some optional features set out in the claims dependent thereto.

### BRIEF DESCRIPTION OF THE DRAWINGS

Embodiments of present disclosure will now be described by way of example with reference to attached figures, wherein:
FIG. 1 is an illustrative representation of a communication system for a mobile communication device includes a first wireless network of a first type (e.g. IEEE 802.11 type) and a second wireless network of a second type (e.g. LTE type);
FIG. 2 is an example of a schematic block diagram of an example of a mobile communication device;
FIGs. 3 and 4 are some examples of different types of mobile devices of the present disclosure, which include a smartphone (FIG. 3) and a tablet computer (FIG. 4);
FIG. 5 is a diagram of a frequency spectrum 500 which shows a first radio frequency (RF) band for communication in the first type of wireless network, and a second RF band for communications in the second type of wireless network, where the second RF band may be adjacent the first RF band;
FIG. 6 is a graph showing a relationship between receiver sensitivity versus antenna isolation;
FIG. 7 is a flowchart for describing a method for use in reducing RF interference in a wireless network, such as the first wireless network of the first type;
FIG. 8 is table depicting data which may be stored in the mobile device in relation to FIG. 7 for reducing RF interference in the wireless network; and
FIG. 9 is a flowchart for describing a further method for reducing interference in the wireless network, for use in combination with the method of FIG. 7 or separately therefrom.

### DETAILED DESCRIPTION OF THE PREFERRED EMBODIMENTS

Techniques are described for reducing RF interference of communications with a first wireless network of a first type (e.g. WLAN or IEEE 802.11 technology) due to simultaneous communications with a second wireless network of a second type (e.g. LTE technology). For each access point in the first network of the first type, a mobile device identifies a frame error rate of communications. The frame error rate is measured while simultaneously communicating with the second network of the second type. The mobile device stores the frame error rate in association with an access point identifier of the access point. Upon encountering the first network again, the mobile device prioritizes the selection of an access point based on a ranking of the access points according to their associated frame error rates from lowest to highest. Further, the mobile device may use adjusted hysteresis parameters for making a handover decision in order to reduce a "ping-pong" selection between access points.

Additional or alternative techniques are used in channel selection in the same or similar environment. Communications in the first wireless network of the first type (e.g. WLAN or 802.11 technology) are made within a first RF band, and communications in the second wireless network of the second type (e.g. LTE technology) are in a second RF band which is adjacent the first RF band. The first RF band may be characterized as having a near side portion and a far side portion, where the near side portion is closer in frequency to the second RF band than the far side portion. The mobile device identifies a signal strength of a received signal from the second wireless network of the second type. The signal strength may correlate to a transmit power of signals transmitted from the mobile device to the second wireless network (e.g. the signal strength may be inversely proportional to the transmit power). When the signal strength of the received signal is less than a low threshold, the mobile device provides a data indication to select an RF channel of the access point that is located in the far side portion of the first RF band. When the signal strength of the received signal is greater than a high threshold, the mobile device provides a data indication to select an RF channel of the access point that is located in the near side portion of the first RF band. The mobile device sends the data indication to the access point or first wireless network, for its selection of an RF channel of the access point for communications with the mobile device.

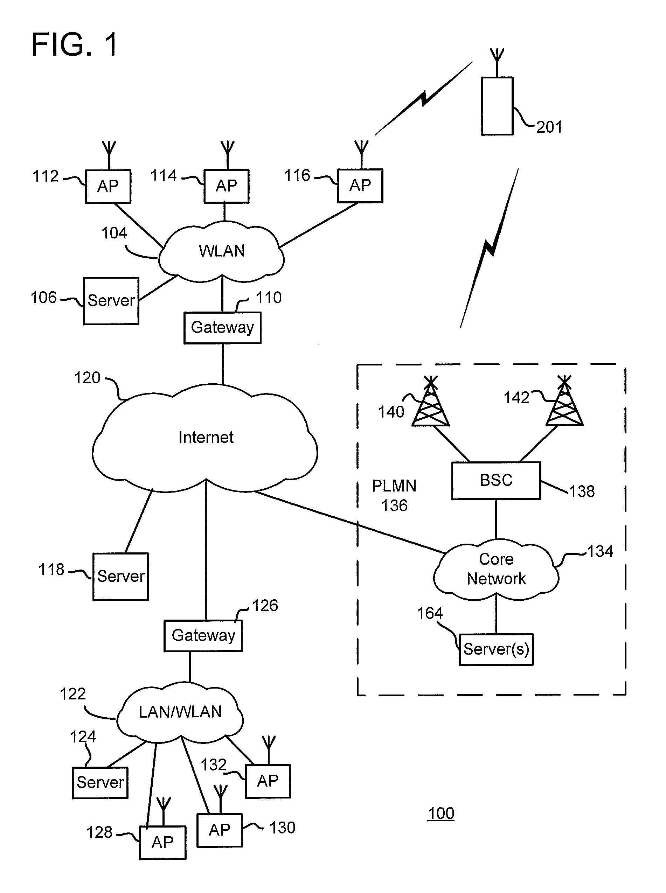

Example Environment. To illustrate an environment within which the techniques of the present disclosure may be practiced, FIG. 1 illustrates a mobile communication device 201 which may communicate in a communication system 100. In the communication system 100, mobile device 201 may communicate with one or more wireless communication networks. For example, mobile device 201 may communicate with a wireless communication network 104 which is a wireless local area network (WLAN). Here, wireless network 104 and mobile device 201 may operate in accordance with IEEE 802.11 standards.

In this example, wireless network 104 has a plurality of wireless access points (APs) 112, 114, and 116 for wireless communications with mobile device 201. WLANs may be identified by a mobile device 201 with use of an identifier, which may be communicated from the WLAN. The wireless network identifier may be, for example, a Set Service Identifier (SSID) or Extended SSID (ESSID). In this example, wireless network 104 includes one or more servers 106, and a gateway 110. Server 106 may provide data, applications, and/or functionality for communication services for mobile device 201.

Wireless network 104 may be a public Wi-Fi "hotspot" for public use, and include what may be referred to as a "captive portal" or "walled garden." For devices connected in wireless network 104 via one of wireless APs 112, 114, and 116, gateway 110 is configured to permit or deny access to the data, applications, and/or functionality, as well as to permit or deny external access outside of wireless network 104 to Internet 120. To do this, gateway 110 has a set of IP address filters which define a set of addresses that are permissible/impermissible, if any at all, for access by devices. Access by a device depends on whether or not a device has been authorized and what access rights are given upon authorization.

Typically, when a request by a device in wireless network 104 is made prior to proper authorization, gateway 110 is configured to redirect the request to a redirect server. In response, the redirect server is configured to respond to mobile device 201 to provide data for producing information (e.g. Web page information) which is rendered in a visual display of mobile device 201 via a Web browser application. The information may solicit a user response, such as a user registration or login with user fields for entering a user name and/or password information. Gateway 110 identifies whether the received user response is sufficient (e.g. whether the user name and password match prestored user name and password information, whether the user payment is accepted, whether the user acceptance is confirmed, etc.). If the user response is deemed sufficient, gateway 110 permits access to the data, applications, and/or functionality in or outside of wireless network 104.

Mobile device 201 may also operate for communications in other different wireless networks, such as a wireless network 122 which is also a WLAN. In this example, wireless network 122 is a private communication network of an enterprise (e.g. an organization, a company, a corporation, etc.) of mobile device 201. Similar to wireless network 104, wireless network 122 has a plurality of wireless APs 128, 130 and 132, one or more servers 124, and a gateway 126. For devices connected in wireless network 122 via one of wireless APs 128, 130, and 132, gateway 126 may be configured to permit or deny access to the data, applications, and/or functionality offered via wireless network 122 depending on whether or not a device has been authorized and what access rights are given upon authorization. For devices attempting to access wireless network 122 via Internet 120, gateway 126 is configured to permit or deny internal access to the data, applications, and/or functionality in wireless network 122.

Such wireless networks (e.g. infrastructure WLANs) may provide or allow access to various data and communication services to its terminals. For example, the wireless networks may provide for communication access to Internet 120 via the Web browser application, or voice telephony communication service with use of Voice over IP (VoIP) communication, or other communication services. For "push-type" data or message synchronization services, for example, mobile device 201 may be enabled to maintain data synchronization with a server (e.g. server 106 or 118) for user data of an application associated with a user account. The application of mobile device 201 and the server may be or include, for example, an electronic mail (e-mail) application program for the communication of e-mail messages.

Although the description relates to a specific example for illustration, where the wireless network or WLAN is an IEEE 802.11-based network, different environments may be applicable as well. The wireless network may be a WiMAX-based network (i.e. IEEE 802.16), or an Ultra-WideBand (UWB)-based network (i.e. IEEE 802.15), as a few examples.

Mobile device 201 of FIG. 1 is additionally configured to access communication services via a Public Land Wireless Network (PLMN) 136 (e.g. a cellular telecommunications network). PLMN 136 includes a core network 134, a plurality of base station controllers such as a base station controller (BSC) 138 coupled to core network 134, and a plurality of base stations such as a base station (BS) 140 and a base station 142 coupled to associated BSCs 138. Core network 134, BSC 138, and BS 140 operate in a conventional fashion as well-documented. Other PLMNs in the environment have a similar or the same architecture as PLMN 136. For communication with PLMNs, such mobile device 201 may be configured in accordance with one or more cellular telecommunication standards, such as Long-Term Evolution (LTE) technology standards. Other technologies may be deemed suitable, such as Enhanced Data rates for GSM Evolution (EDGE) or Enhanced GPRS (EGPRS), Universal Mobile Telecommunications System (UMTS), or EVolution-Data Only (EV-DO) (for CDMA) technologies, as a few examples.

To achieve communications in both technology environments (e.g. IEEE 802.11 and cellular/LTE), mobile device 201 makes use of co-located radios, but communications may be hindered due to RF interference.

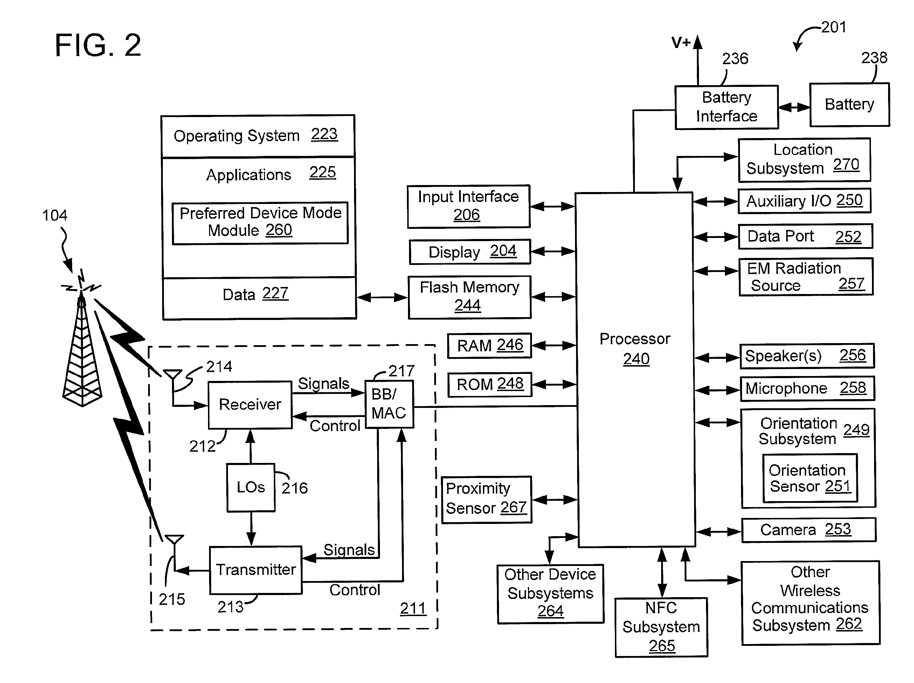

Reference will now be made to FIG. 2 which illustrates one example of a schematic block diagram of mobile device 201 in which example embodiments may be applied. In the illustrated example embodiment, mobile device 201 is a communication device and, more particularly, is a mobile communication device having data and voice communication capabilities, and configured to communicate with other computer systems (e.g. via the Internet). It will, however, be appreciated that mobile device 201 may take other forms.

Depending on the functionality provided by mobile device 201, in various example embodiments mobile device 201 may be a multiple-mode communication device configured for both data and voice communication, a mobile telephone, such as a smartphone, a wearable computers such as a watch, a tablet computer such as a slate computer, a personal digital assistant (PDA), or a computer system. Mobile device 201 may take other forms apart from those specifically listed above. The electronic device may also be referred to as a mobile communications device, a communication device, a mobile device and, in some cases, as a device.

Mobile device 201 includes a controller including one or more processor 240 (such as a microprocessor) which controls the overall operation of mobile device 201. The processor 240 interacts with device subsystems such as a wireless communication subsystem 211 for exchanging radio frequency signals with wireless network 104 to perform communication functions. The processor 240 is communicably coupled with additional device subsystems including one or more output interfaces 205 (such as a display 204 and/or a speaker 256 and/or electromagnetic (EM) radiation source 257), one or more input interfaces 206 (such as a camera 253, microphone 258, keyboard (not shown), control buttons (not shown), a navigational input device (not shown), and/or a touch-sensitive overlay (not shown)) associated with a touchscreen display 204, an orientation subsystem 249, memory (such as flash memory 244, random access memory (RAM) 246, read only memory (ROM) 248, etc.), auxiliary input/output (I/O) subsystems 250, a data port 252 (which may be a serial data port, such as a Universal Serial Bus (USB) data port), a near field communications (NFC) subsystem 265, and other device subsystems generally designated as 264. Some of the subsystems shown in FIG. 2 perform communication-related functions, whereas other subsystems may provide "resident" or on-device functions.

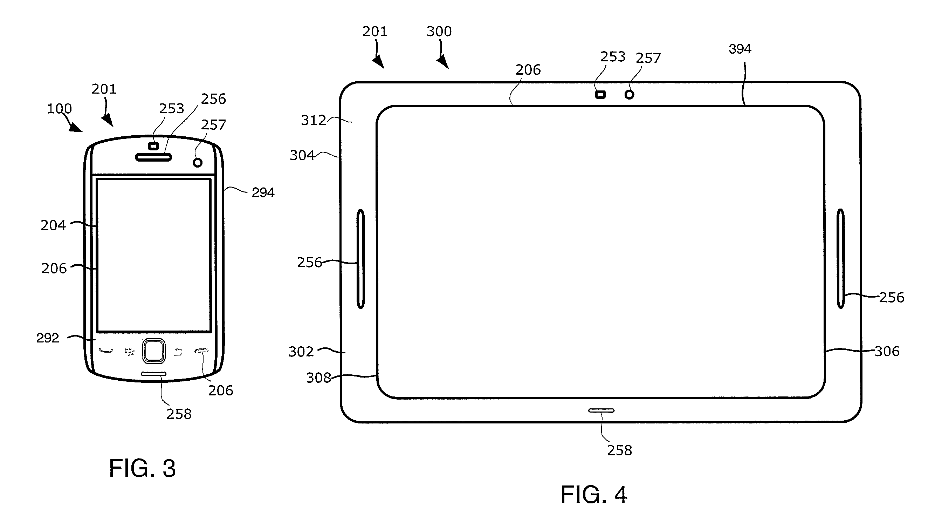

In at least some example embodiments, mobile device 201 may include a touchscreen display which acts as both an input interface 206 (i.e. touch-sensitive overlay) and an output interface 205 (i.e. display). The touchscreen display may be constructed using a touch-sensitive input surface which is connected to an electronic controller and which overlays the display 204. The touch-sensitive overlay and the electronic controller provide a touch-sensitive input interface 206 and the processor 240 interacts with the touch-sensitive overlay via the electronic controller. In at least some example embodiments, the touch-sensitive overlay may have a touch-sensitive input surface which is larger than the display 204. For example, in at least some example embodiments, the touch-sensitive overlay may extend overtop of a frame 312 (of FIG. 3) which surrounds the display 204. In such example embodiments, the frame 312 (of FIG. 3) may be referred to as an active frame since it is capable of acting as an input interface 206. In at least some example embodiments, the touch-sensitive overlay may extend to the sides of mobile device 201.

As noted above, mobile device 201 may include a communication subsystem 211 which allows mobile device 201 to communicate over wireless network 104. The communication subsystem 211 includes a receiver 212, a transmitter 213, and associated components, such as one or more antenna elements 214 and 215, local oscillators (LOs) 216, and a processing module such as a digital signal processor (DSP) 217. The antenna elements 214 and 215 may be embedded or internal to mobile device 201 and a single antenna may be shared by both receiver and transmitter. The particular design of the wireless communication subsystem 211 depends on wireless network 104 in which mobile device 201 is intended to operate.

With use of communication subsystem 211, mobile device 201 may communicate with any one of a plurality of stations or access points (APs) of wireless network 104 (e.g. an IEEE 802.11 based WLAN; see also FIG. 1) within its coverage area. Thus, communication subsystem 211 may be a wireless transceiver or radio, such as an IEEE 802.11 radio configured for communications in accordance with IEEE 802.11 technologies. More generally, wireless network 104 may be a first wireless network of a first type.

Mobile device 201 may send and receive communication signals over wireless network 104 after the required network registration or activation procedures have been completed. Signals received by the antenna 214 through wireless network 104 are input to the receiver 212, which may perform such common receiver functions as signal amplification, frequency down conversion, filtering, channel selection, etc., as well as analog-to-digital (A/D) conversion. A/D conversion of a received signal allows more complex communication functions such as demodulation and decoding to be performed in the DSP 217. In a similar manner, signals to be transmitted are processed, including modulation and encoding, for example, by the DSP 217. These DSP-processed signals are input to the transmitter 213 for digital-to-analog (D/A) conversion, frequency up conversion, filtering, amplification, and transmission to wireless network 104 via the antenna 215. The DSP 217 not only processes communication signals, but may also provide for receiver and transmitter control. For example, the gains applied to communication signals in the receiver 212 and the transmitter 213 may be adaptively controlled through automatic gain control algorithms implemented in the DSP 217.

Mobile device 201 may also include another wireless communication subsystem 262. Communication subsystem 262 may be, for example, a wireless transceiver or radio configured for communications in accordance with cellular communication technologies, such as LTE technologies. The wireless network with which communication subsystem 262 interacts may be a second wireless network of a second type which is different from the wireless network of the first type. Communication subsystem 262 may operate for wireless communications in a manner generally similar to communication subsystem 211.

In some example embodiments, the auxiliary input/output (I/O) subsystems 250 may include an external communication link or interface; for example, an Ethernet connection. Mobile device 201 may include other wireless communication interfaces for communicating with other types of wireless networks; for example, a wireless network such as an orthogonal frequency division multiplexed (OFDM) network. The auxiliary I/O subsystems 250 may include a vibrator for providing vibratory notifications in response to various events on mobile device 201 such as receipt of an electronic communication or incoming phone call, or for other purposes such as haptic feedback (touch feedback).

The data port 252 may be used for synchronization with a user's host computer system (not shown). The data port 252 enables a user to set preferences through an external device or software application and extends the capabilities of mobile device 201 by providing for information or software downloads to mobile device 201 other than through wireless network 104. The alternate download path may for example, be used to load an encryption key onto mobile device 201 through a direct, reliable and trusted connection to thereby provide secure device communication.

In at least some example embodiments, mobile device 201 also includes a device orientation subsystem 249 including at least one orientation sensor 251 which is connected to the processor 240 and which is controlled by one or a combination of a monitoring circuit and operating software. The orientation sensor 251 detects the orientation of the device 201 or information from which the orientation of the device 201 can be determined, such as acceleration. In some example embodiments, the orientation sensor 251 is an accelerometer, such as a three-axis accelerometer. An accelerometer is a sensor which converts acceleration from motion (e.g. movement of the device 201 or a portion thereof due to the strike force) and gravity which are detected by a sensing element into an electrical signal (producing a corresponding change in output). Accelerometers may be available in one, two or three axis configurations. Higher order axis configurations are also possible. Accelerometers may produce digital or analog output signals depending on the type of accelerometer.

An orientation sensor 251 may generate orientation data which specifies the orientation of mobile device 201. The orientation data, in at least some example embodiments, specifies the orientation of the device 201 relative to the gravitational field of the earth.

In some example embodiments, the orientation subsystem 249 may include other orientation sensors 251, instead of or in addition to accelerometers. For example, in various example embodiments, the orientation subsystem 249 may include a gravity sensor, a gyroscope, a tilt sensor, an electronic compass or other suitable sensor, or combinations thereof. In some example embodiments, the device orientation subsystem 249 may include two or more orientation sensors 251 such as an accelerometer and an electronic compass.

Mobile device 201 may, in at least some example embodiments, include a near field communications (NFC) subsystem 265. The NFC subsystem 265 is configured to communicate with other wireless devices 201 and/or tags, using an NFC communications protocol. NFC is a set of short-range wireless technologies which typically require a distance of 4 cm or less for communications. The NFC subsystem 265 may include an NFC chip and an NFC antenna.

Mobile device 201 may include a microphone and/or one or more speakers. In at least some example embodiments, mobile device 201 may include a plurality of speakers 256. For example, in some example embodiments, mobile device 201 may include two or more speakers 265. The two or more speakers 256 may, for example, be disposed in spaced relation to one another. That is, in at least some example embodiments, mobile device 201 may include a first speaker and a second speaker and the first speaker and the second speaker may be spatially separated from one another within mobile device 201. In at least some example embodiments, the display 204 may be disposed between the first speaker and the second speaker of the electronic device. In such example embodiments, the first speaker may be located at one side of the display 204 and the second speaker may be located at another side of the display which is opposite the side of the display where the first speaker is located. For example, the first speaker may be disposed at a left side of the display and the second speaker may be disposed at a right side of the display. In at least some example embodiments, each speaker 256 may be associated with a separate audio channel. The multiple speakers may, for example, be used to provide stereophonic sound (which may also be referred to as stereo).

Mobile device 201 may also include one or more cameras 253. The one or more cameras 253 may be capable of capturing images in the form of still photographs or motion video. In at least some example embodiments, mobile device 201 includes a front facing camera 253. A front facing camera is a camera which is generally located on a front face of mobile device 201. The front face is typically the face on which a display 204 is mounted. That is, the display 204 is configured to display content which may be viewed from a side of mobile device 201 where the camera 253 is directed. The front facing camera 253 may be located anywhere on the front surface of the electronic device; for example, the camera 253 may be located above or below the display 204. The camera 253 may be a fixed position camera which is not movable relative to the display 204 of mobile device 201 and/or the housing of mobile device 201. In such example embodiments, the direction of capture of the camera is always predictable relative to the display 204 and/or the housing. In at least some example embodiments, the camera may be provided in a central location relative to the display 204 to facilitate image acquisition of a face.

In at least some example embodiments, mobile device 201 includes an electromagnetic (EM) radiation source 257. In at least some example embodiments, the EM radiation source 257 is configured to emit electromagnetic radiation from the side of the electronic device which is associated with a camera 253 of that mobile device 201. For example, where the camera is a front facing camera 253, mobile device 201 may be configured to emit electromagnetic radiation from the front face of mobile device 201. That is, in at least some example embodiments, the electromagnetic radiation source 257 is configured to emit radiation in a direction which may visible by the camera. That is, the camera 253 and the electromagnetic radiation source 257 may be disposed on mobile device 201 so that electromagnetic radiation emitted by the electromagnetic radiation source 257 is visible in images obtained by the camera.

In some example embodiments, the electromagnetic radiation source 257 may be an infrared (IR) radiation source which is configured to emit infrared radiation. In at least some example embodiments, the electromagnetic radiation source 257 may be configured to emit radiation which is not part of the visible spectrum. The camera 253 may be a camera which is configured to capture radiation of the type emitted by the electromagnetic radiation source 257. Accordingly, in at least some example embodiments, the camera 253 is configured to capture at least some electromagnetic radiation which is not in the visible spectrum.

In some example embodiments, mobile device 201 is provided with a service routing application programming interface (API) which provides an application with the ability to route traffic through a serial data (i.e., USB) or Bluetooth® (Bluetooth® is a registered trademark of Bluetooth SIG, Inc.) connection to a host computer system using standard connectivity protocols. When a user connects their mobile device 201 to the host computer system via a USB cable or Bluetooth® connection, traffic that was destined for wireless network 104 is automatically routed to mobile device 201 using the USB cable or Bluetooth® connection. Similarly, any traffic destined for wireless network 104 is automatically sent over the USB cable Bluetooth® connection to the host computer system for processing.

Mobile device 201 also includes a battery 238 as a power source, which is typically one or more rechargeable batteries that may be charged for example, through charging circuitry coupled to a battery interface 236 such as the data port 252. The battery 238 provides electrical power to at least some of the electrical circuitry in mobile device 201, and the battery interface 236 provides a mechanical and electrical connection for the battery 238. The battery interface 236 is coupled to a regulator (not shown) which provides a regulated voltage V to the circuitry for powering mobile device 201.

Mobile device 201 stores data 227 in an erasable persistent memory, which in one example embodiment is the flash memory 244. In various example embodiments, the data 227 includes service data including information required by mobile device 201 to establish and maintain communication with wireless network 104. The data 227 may also include user application data such as email messages, address book and contact information, calendar and schedule information, notepad documents, image files, and other commonly stored user information stored on mobile device 201 by its user, and other data. The data 227 stored in the persistent memory (e.g. flash memory 244) of mobile device 201 may be organized, at least partially, into one or more databases or data stores. The databases or data stores may contain data items of the same data type or associated with the same application. For example, email messages, contact records, and task items may be stored in individual databases within the device memory.

Mobile device 201 may provide two principal modes of communication: a data communication mode and a voice communication mode. The communications make use of communication subsystem 211, communication subsystem 262, or both. In the data communication mode, a received data signal such as a text message, an email message, or Web page download will be processed by the communication subsystem 211 and input to the processor 240 for further processing. For example, a downloaded Web page may be further processed by a browser application or an email message may be processed by an email messaging application and output to the display 204. A user of mobile device 201 may also compose data items, such as email messages; for example, using the input devices in conjunction with the display 204. These composed items may be transmitted through the communication subsystem 211 or 262 over the wireless network.

In the voice communication mode, mobile device 201 provides voice telephony functions. The overall operation is similar, except that the received signals would be output to the speaker 256 and signals for transmission would be generated by a transducer such as the microphone 258. The telephony functions are provided by a combination of software/firmware (i.e., a voice communication module) and hardware (i.e., the microphone 258, the speaker 256 and input interfaces 206). Alternative voice or audio I/O subsystems, such as a voice message recording subsystem, may also be implemented on mobile device 201. Although voice or audio signal output is typically accomplished primarily through the speaker 256, the display screen 204 may also be used to provide an indication of the identity of a calling party, duration of a voice call, or other voice call related information.

The processor 240 operates under stored program control and executes software modules 221 stored in memory such as persistent memory; for example, in the flash memory 244. As illustrated in FIG. 1, the software modules 221 include operating system software 223 and other software applications 225 such as preferred device mode module 260. In the example embodiment of FIG. 1, the preferred device mode module 260 is implemented as a stand-alone application 225. However, in other example embodiments, the preferred device mode module 260 could be implemented as part of the operating system 223 or another application 225.

The software applications 225 on mobile device 201 may also include a range of additional applications, including for example, a notepad application, Internet browser application, voice communication (i.e. telephony) application, mapping application, or a media player application, or any combination thereof. Each of the software applications 225 may include layout information defining the placement of particular fields and graphic elements (e.g. text fields, input fields, icons, etc.) in the user interface (e.g. the display 204) according to the application.

The software modules 221 or parts thereof may be temporarily loaded into volatile memory such as the RAM 246. The RAM 246 is used for storing runtime data variables and other types of data or information, as will be apparent to those skilled in the art. Although specific functions are described for various types of memory, this is merely one example, and those skilled in the art will appreciate that a different assignment of functions to types of memory could also be used.

A predetermined set of applications that control basic device operations, including data and possibly voice communication applications will normally be installed on mobile device 201 during or after manufacture. Additional applications and/or upgrades to the operating system 223 or software applications 225 may also be loaded onto mobile device 201 via communication subsystem 211 or 262, the auxiliary I/O subsystem 250, the data port 252, or other suitable subsystem 264. The downloaded programs or code modules may be permanently installed; for example, written into the program memory (i.e. the flash memory 244), or written into and executed from the RAM 246 for execution by the processor 240 at runtime.

Example Smartphone Electronic Device. Referring now to FIG. 3, a front view of an example mobile device 201 which is a smartphone 100 is illustrated. The smartphone 100 is a mobile phone which offers more advanced computing capability than a basic non-smartphone cellular phone. For example, the smartphone 100 may have the ability to execute third party applications which are stored on the smartphone.

The smartphone 100 may include the components discussed above with reference to FIG. 2 or a subset of those components. The smartphone 100 includes a housing 294 which houses at least some of the components discussed above with reference to FIG. 2.

In the example embodiment illustrated, the smartphone includes a display 204, which may be a touchscreen display which acts as an input interface 206. The display 204 is disposed within the smartphone 100 so that it is viewable at a front side 292 of the smartphone 100. That is, a viewable side of the display 204 is disposed on the front side 292 of the smartphone. In the example embodiment illustrated, the display 204 is framed by the housing 294.

The example smartphone 100 also includes other input interfaces 206 such as one or more buttons, keys or navigational input mechanisms. In the example illustrated, at least some of these additional input interfaces 206 are disposed for actuation at the front side 292 of the smartphone.

The example smartphone also includes a speaker 256. In the example embodiment illustrated, the smartphone includes a single speaker 256 which is disposed vertically above the display 204 when the smartphone 100 is held in a portrait orientation where its height is longer than its width. The speaker 256 may be disposed on the front face of the smartphone 100.

While the example smartphone 100 of FIG. 3 includes a single speaker 256, in other example embodiments, the smartphone 100 may include a greater number of speakers 256. For example, in at least some example embodiments, the smartphone 100 may include a second speaker 256 which is disposed vertically below the display 204 when the smartphone is held in a portrait orientation where its height is longer than its width (i.e. the orientation illustrated in FIG. 3).

The example smartphone 100 also includes a microphone 258. In the example illustrated, the microphone 258 is vertically disposed below the display 204 when the smartphone is held in the portrait orientation. The microphone 258 and at least one speaker 256 may be arranged so that the microphone is in close proximity to a user's mouth and the speaker 256 is in close proximity to a user's ear when the user holds the phone to their face to converse on the smartphone.

The example smartphone 100 also includes a front facing camera 253 which may be located vertically above the display 204 when the smartphone 100 is held in a portrait orientation where its height is longer than its width. The front facing camera 253 is located so that it may capture images of objects which are located in front of and/or surrounding the front side of the smartphone 100.

The example smartphone 100 also includes an electromagnetic radiation source 257. The electromagnetic radiation source 257 is disposed on the front side 292 of the smartphone 100. In this orientation, electromagnetic radiation which is produced by the electromagnetic radiation source 257 may be projected onto objects which are located in front of and/or surrounding the front side of the smartphone 100. Such electromagnetic radiation (or the projection of electromagnetic radiation onto objects) may be captured on images obtained by the camera 253.

Example Tablet Electronic Device. The wireless device may be a tablet computer 300 ("tablet"), one of which is illustrated in FIG. 4. Tablet computer 300 of FIG. 4 may include many of the same features and components of the smartphone 100 of FIG. 3. However, tablet computer 300 of FIG. 3 is generally larger than the smartphone 100 of FIG. 3. Tablet computer 300 may include the components discussed above with reference to FIG. 2 or a subset of those components. Tablet computer 300 includes a housing 394 which houses at least some of the components discussed above with reference to FIG. 2.

Tablet computer 300 includes a display 304, which may be a touchscreen display which acts as an input interface 206. The display 304 is disposed within tablet computer 300 so that it is viewable at a front side 302 of tablet computer 300. That is, a viewable side of the display 304 is disposed on the front side 302 of tablet computer 300. In the example embodiment illustrated, the display 304 is framed by the housing 394, with use of a frame 312 which surrounds the display 304. The frame 312 is portion of the housing 394 which provides a border around the display 304. In at least some example embodiments, the frame 312 is an active frame 312. That is, the frame has a touch sensitive overlay which allows mobile device 201 to detect a touch applied to the frame, thereby allowing the frame 312 to act as an input interface 206 (of FIG. 1).

The example tablet computer 300 includes a plurality of speakers 256. In the example embodiment illustrated, the tablet includes two speakers 256. The two speakers 256 are disposed on opposing sides of the display 304. More particularly, when tablet computer 300 is held in a landscape orientation (such as the orientation illustrated in FIG. 3) where its width is longer than its height, one of the two speakers is disposed on a right side 306 of the display 304 and one of the speakers is disposed on the left side 308 of the display 304. Both speakers 256 are disposed on the front side 302 of tablet computer 300.

The example tablet computer 300 also includes a microphone 258. In the example illustrated, the microphone 258 is vertically disposed below the display 304 when the tablet computer is held in the landscape orientation illustrated in FIG. 4. The microphone 258 may be located in other locations in other example embodiments.

The example tablet computer 300 also includes a front facing camera 253 which may be located vertically above the display 304 when tablet computer 300 is held in a landscape orientation (i.e. the orientation of FIG. 3). The front facing camera 253 is located so that it may capture images of objects which are located in front of and/or surrounding the front side of tablet computer 300.

The example tablet computer 300 also includes an electromagnetic radiation source 257. The electromagnetic radiation source 257 is disposed on the front side 304 of tablet computer 300. In this orientation, electromagnetic radiation which is produced by the electromagnetic radiation source 257 may be projected onto objects which are located in front of and/or surrounding the front side 302 of tablet computer 300. Such electromagnetic radiation (or the projection of electromagnetic radiation onto objects) may be captured on images obtained by the camera 253.

In environments which make use of two or more co-located radios (e.g. both WLAN and LTE radios) utilizing adjacent RF bands (e.g. see mobile device 201 in relation to FIGs. 1-4), there is a need for ensuring that communications are not hindered due to RF interference from their simultaneous use. When the RF bands assigned for use are adjacent one another, out-of-band RF interference is likely to result.

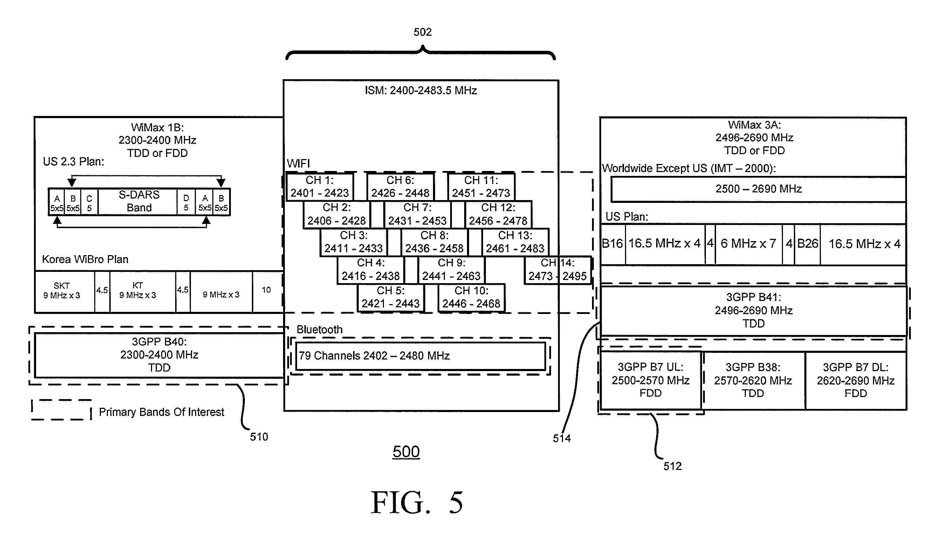

To better illustrate, FIG. 5 is a diagram of a frequency spectrum 500 which shows a first radio frequency (RF) band 502 for communication in the first wireless network of the first type (e.g. WLAN or 802.11 type) and a second RF band 510, 512, or 514 for communications in the second wireless network of the second type (e.g. LTE type). As revealed in the diagram, any one of second RF bands 510, 512, or 514 of the second type is adjacent first RF band 502. Communications in the first RF band 502 may be interfered with by communications with the second wireless network in second RF band 510, 512, or 514, if no special techniques are employed in relation to the mobile device.

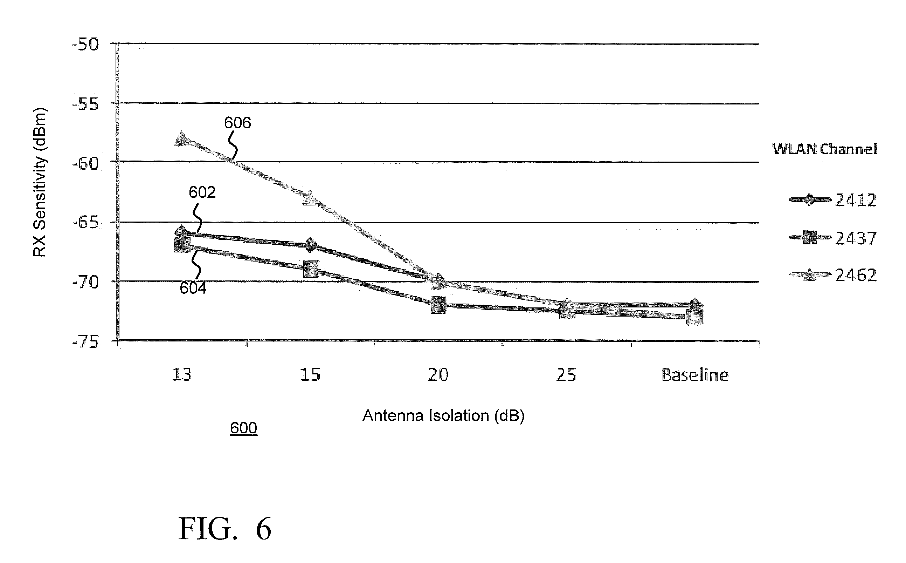

In particular with respect to using both WLAN and LTE, it has been observed that LTE transmissions degrade the performance of a co-located WLAN radio receiver due to out-of-band leakage and adjacent channel interference. Some of this may be attributed to the non-linear behavior of the receiver in the adjacent band. To illustrate, FIG. 6 is a graph 600 of different relationships 602, 604, and 606 between receiver sensitivity and antenna isolation for different WLAN channels. In particular, graph 600 reveals the loss in receiver sensitivity as a function of antenna isolation during LTE transmissions. LTE B7 radio was set to 20MHz (f_{C} = 2509 MHz) with 100 resource block allocation and output power of 22dBm. As is apparent, the WLAN channel closest to the LTE band (i.e. relationship 606 of FIG. 6, channel 2462) suffers 15dB of desense with typical LTE-to-WLAN antenna isolation of 13dB. This degradation is measured at an LTE output power of 22 dBm, but is expected to be greater at the maximum LTE output power of 24 dBm.

On the other hand, in other environments, harmonic interference may be an issue, whether or not the RF bands are adjacent one another. Harmonic interference results when a harmonic frequency of a primary signal transmitted from the mobile device causes interference in a different RF band.

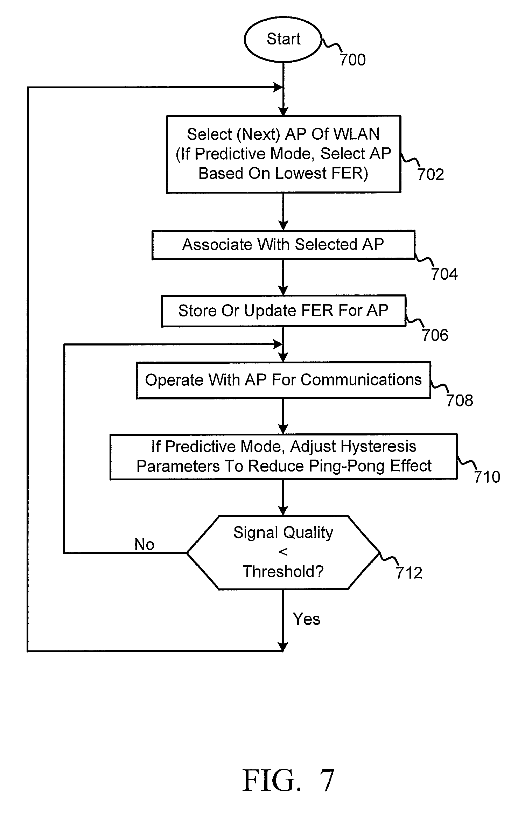

For use in mitigating such effects, FIG. 7 is a flowchart for describing a method for use in reducing interference in a wireless network. A method may be employed a mobile communication device which communicates in a first wireless network of a first type and simultaneously communicates in a second wireless network of a second type. The communication in the first wireless network occurs within a first radio frequency (RF) band and the communications in the second wireless network occur in a second RF band; the first and the second RF bands may be adjacent one another. The first type of network may be an IEEE 802.11 based network or wireless local area network (WLAN). The second type of network may be cellular network or, more specifically, a Long Term Evolution (LTE) network. On the other hand, in other environments harmonic interference may be an issue, whether or not the RF bands are adjacent one another.

This method of FIG. 7 is for use in selecting one of a plurality of access points of the first wireless network, in such a manner that potential RF interference from communications with the second wireless network is reduced. This method is employed with use of a normal mode of selection and a predictive mode of selection, the predictive mode being the mode in which interference is further reduced. Although FIG. 7 generally describes that the technique is performed in relation to a single wireless network or WLAN, it is in practice performed with each wireless network or WLAN encountered by the mobile device.

The mobile device initially operates in the normal mode of selection. Beginning at a start block 700 of FIG. 7, the mobile device selects one of the access points of the first wireless network for communication (step 702 of FIG. 7). The mobile device associates with the selected access point (step 704 of FIG. 7), and performs any additional operations necessary for establishing and communicating in the first wireless network via the selected access point.

During the communications with the selected access point, the mobile device regularly calculates a frame error rate (FER) of the communications. The mobile device identifies and stores in memory a frame error rate that was calculated during simultaneous communication with the second wireless network (step 706 of FIG. 7). This frame error rate is stored in association with an identifier of the selected access point. The selected access point identifier is further stored in association with an identifier of the first wireless network. For example, the stored identifier of the access point of the first wireless network may be a basic service set identifier (BSSID), and the stored identifier of the first wireless network may be a service set identifier (SSID) or extended SSID (ESSID). In other embodiments, in step 706 the mobile device regularly calculates and makes use of an error or signal indication that is different from the frame error rate.

The mobile device continues to maintain communications with the first wireless network via the selected access point (step 708 of FIG. 7). The mobile device regularly monitors a signal quality of these communications (step 712 of FIG. 7). Note that step 710 of FIG. 7, which is applicable to the predictive mode of selection, will be described later. The signal quality in step 712 may be or be based upon a received signal strength indication (RSSI) of a received signal from the access point. Alternatively or additionally, the signal quality in step 712 may be based upon a signal-to-noise ratio (SNR) of the received signal. Also alternatively or additionally, the signal quality in step 712 may be based not only on downlink signal quality (e.g. RSSI and/or SNR), but also on uplink signal quality, such as a packet error rate (e.g. the number of link layer retries) or a data rate.

If the signal quality of the communications is poor in step 712, the mobile device will perform a handover to a different access point in the first wireless network. When determining whether a handover should be performed (i.e. making a handover decision), the mobile device makes use of hysteresis parameters. The hysteresis parameters relate to how long the mobile device will remain associated with the current access point, despite any variations in signal quality (e.g. poor signal conditions). The hysteresis parameters may be or include one or more signal strength thresholds, and/or a period of time within which to assess such data and/or render a handover decision or handover.

Thus, if the signal quality of the communications is greater than or equal to a threshold as tested in step 712 (i.e. adequate signal quality, indication of no handover), then the mobile device continues to maintain communications with the selected access point at step 708. On the other hand, if the signal quality of the communications is less than the threshold as tested in step 712 (i.e. inadequate signal quality, indication for handover), then operation proceeds back to step 702 for selecting a different one of the access points of the first wireless network (step 702 of FIG. 7).

With respect to the newly-selected access point, the mobile device will perform the actions previously described in relation to steps 704, 706, 708, and 712. The mobile device associates with the newly-selected access point (step 704 of FIG. 7), identifies and stores in memory the frame error rate of communications in association with an identifier of the access point (step 706 of FIG. 7), continues to maintain communications with the access point (step 708 of FIG. 7), and tests the signal quality of the signals (step 712).

The operation as described above will repeat for even additional access points of the first wireless network. Thus, in the normal mode of selection, the mobile device builds and maintains in the memory a list or table of identifiers (e.g. SSIDs or ESSIDs) of wireless networks of the first type, identifiers (BSSIDs) of the access points stored in association with those wireless networks, and the frame error rates of the access points which are measured during simultaneous communication with the second wireless network. At least some of most of the frame error rates associated with the access points will be different. Thus, a ranking (whether explicit or implicit) of the frame error rates from lowest to highest, and/or a corresponding ranking of access points based on the ranking of stored frame error rates from lowest to highest, will exist.

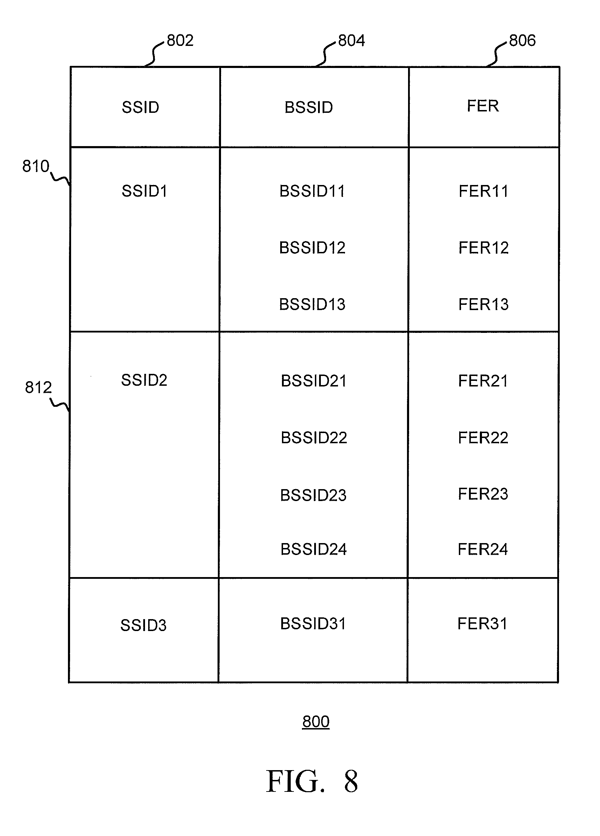

To illustrate, referring briefly to FIG. 8, what is shown is a list or table 800 depicting data which may be stored in the mobile device in relation to FIG. 7 for reducing interference in the first wireless network. Table 800 includes a plurality of identifiers 802 (e.g. ESSIDs) of wireless networks of the first type (i.e. column 1), such as an identifier 810 (e.g. ESSID1) and an identifier 812 (e.g. ESSID2). The mobile device has previously encountered and communicated with the wireless networks identified by identifiers 802. Table 800 also includes a plurality of identifiers 804 (e.g. BSSIDs) of access points of each wireless network and, for each access point identifier, a frame error rate 806 associated therewith. The frame error rates are measured during the mobile device's simultaneous communications with the second wireless network.

For example, wireless network identified by ESSID1 is associated with access points identified by BSSID11, BSSID12, and BSSID13. BSSID11 is associated with a frame error rate of FER11, BSSID12 is associated with a frame error rate of FER12, and BSSID13 is associated with a frame error rate of FER13. As another example, wireless network identified by ESSID2 is associated with access points identified by BSSID21, BSSID22, BSSID23, and BSSID24. BSSID21 is associated with a frame error rate of FER21, BSSID22 is associated with a frame error rate of FER22, BSSID23 is associated with a frame error rate of FER23, and BSSID24 is associated with a frame error rate of FER24.

Sometime during operation per FIG. 7, the mobile device will switch from operating in the normal mode of selection to operating in the predictive mode of selection. The switching may be performed in response to identifying a predetermined condition. For example, the mobile device may switch from the normal mode to the predictive mode based on identifying that the number of access points communicated with in the first wireless network reaches a predetermined number. In the predictive mode of selection, the mobile device will operate per the flowchart of FIG. 7 to prioritize selection of access points of the first wireless network for communications in accordance with the ranking of the frame error rates from lowest to highest that was previously stored.

Even when the mobile device exits the first wireless network (e.g. ceasing communications therewith), the mobile device will maintain the storage of the ranking of the frame error rates and/or the corresponding ranking of access points. This stored information will be utilized by the mobile device when the mobile device subsequently or again encounters the first wireless network.

Thus, referring to FIG. 7 in the predictive mode of selection, the mobile device selects one of the access points of the first wireless network for communication (step 702 of FIG. 7). Initially in step 702 (e.g. when the mobile device again encounters or discovers the first wireless network, after being out-of-range), the mobile device prioritizes the selection of the access point that is associated with the lowest frame error rate, relative to all other access points in the first wireless network.

In one embodiment, the mobile device receives signal strengths of the received signals from the access points of the first wireless network (e.g. RSSI, or RSSI and SNR), and prioritizes the selection of the access points based on the previously stored ranking as well as the current received signal strengths. In one particular embodiment, the mobile device prioritizes the selection of the access point that is associated with the lowest frame error rate, if the signal strength from that access point is greater than a signal strength threshold. Otherwise, the mobile device will prioritize the selection of the next access point according to the ranking of the stored frame error rates in the same manner.

For the selected access point, the mobile device will perform actions as previously described in the flowchart. The mobile device associates with the access point (step 704 of FIG. 7), may identify and optional store (e.g. optionally update) in memory the frame error rate of communications in association with an identifier of the access point (step 706 of FIG. 7), and continues to maintain communications with the access point (step 708 of FIG. 7). Additionally in the predictive mode of operation, the mobile device adjusts the hysteresis parameters used for making a handover decision (step 710 of FIG. 7). The adjusted hysteresis parameters are lowered in attempt to avoid occurrence of a ping-pong selection between access points in the first wireless network by the mobile device.

While the mobile device maintains operations with the selected access point for communications, the mobile device monitors a signal quality of the communications, as tested in step 712 of FIG. 7. If the signal quality of the communications is greater than or equal to a threshold (i.e. indication of no handover), then the mobile device continues to operate with the selected access point for communications at step 708. As the hysteresis parameters have been adjusted, the mobile device will tend to remain on this initial selected access point, rather than prematurely handover to another different access point.

On the other hand, if the signal quality of the communications is less than the threshold (i.e. indication for handover), then operation proceeds back to step 702 for selecting a next one of the access points of the first wireless network (step 702 of FIG. 7). The next access point will be selected based on or in accordance with the ranking of the stored frame error rates from lowest to highest. For this newly-selected access point, the mobile device will perform the actions as previously described in the flowchart.

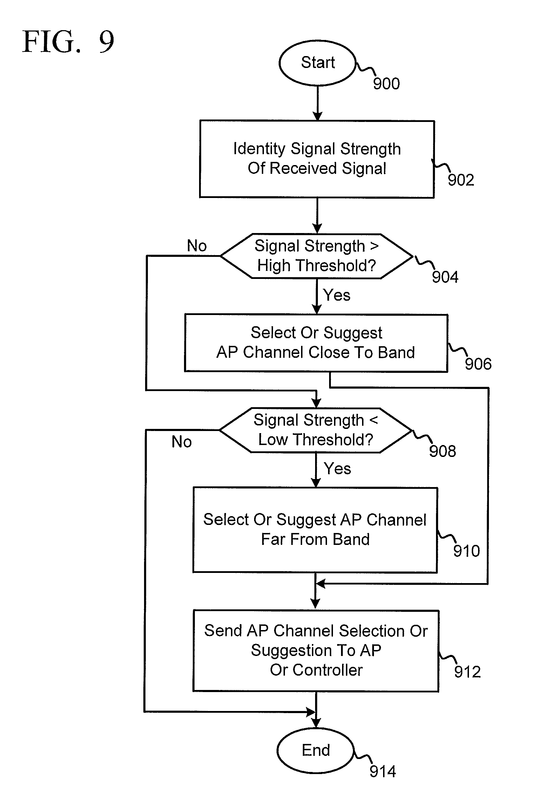

FIG. 9 is a flowchart for describing a further method for reducing interference in the wireless network, for use in combination with the method of FIG. 7, or separately therefrom. The method may be employed a mobile communication device which communicates in a first wireless network of a first type and simultaneously communicates in a second wireless network of a second type. The communication in the first wireless network occurs within a first radio frequency (RF) band, and the communication in the second wireless network occurs in a second RF band which is adjacent the first RF band. The first type of network may be an IEEE 802.11 based network or wireless local area network (WLAN). The second type of network may be cellular network or, more specifically, a Long Term Evolution (LTE) network. On the other hand, in other environments harmonic interference may be an issue, whether or not the RF bands are adjacent one another.

The method of FIG. 9 is for use in selecting one of a plurality of channels of a selected access point of the first wireless network, in such a manner that potential RF interference from communications with the second wireless network is reduced. The mobile device is operating for communications in the first wireless network via an access point for communications, and may be simultaneously operating for communications in the second wireless network as well.

Beginning at a start block 900 of FIG. 9, the mobile device identifies a signal strength of received signals from the second wireless network (step 902 of FIG. 9). The signal strength in step 902 may be or be based upon a received signal strength indication (RSSI) of the received signals. Note that, in this environment, the signal strength of the received signals correlates to the transmit power of signals transmitted from the mobile device to the second wireless network. For example, the signal strength may be inversely proportional to the transmit power. A relatively strong signal strength is associated with a relatively low transmit power, whereas a relatively weak signal strength is associated with a relatively high transmit power. The higher the transmit power of the signals transmitted to the second wireless network, the more likely that these signals will hinder communications with the selected access point in the first wireless network.

As described earlier, the communications with the first wireless network occur within the first RF band and the communications with the second wireless network occur in the second RF band which is adjacent the first RF band. The first RF band may be characterized as having a near side portion and a far side portion, where the near side portion is closer in frequency to the second RF band than the far side portion. It has been observed that channels within the far side portion of the first RF band are less likely to be interfered with from communications with the second wireless network, but selection and use of channels within the near side portion of the first RF band may be suitable for adequate distribution and/or loading of the channels.

Continuing with FIG. 9, if the signal strength of the received signal is greater than a high threshold (i.e. good adequate signal quality) (step 904 of FIG. 9), the mobile device provides a data indication to select an RF channel of the access point that is located in the near side portion of the first RF band (step 906 of FIG. 9). On the other hand, if the signal strength of the received signal is lower than a low threshold (i.e. poor or inadequate signal quality) (step 908 of FIG. 9), the mobile device provides a data indication to select an RF channel of the access point that is located in the far side portion of the first RF band (step 910 of FIG. 9). When the signal strength is in between the low and the high thresholds, the mobile device may refrain from providing a data indication for selecting any channel in the near or the far side portion (e.g. either providing no data indication, or providing a data indication which indicates that any channel in the RF band is suitable).

The mobile device then sends the data indication to the access point or to a central controller of the first wireless network (step 912 of FIG. 9). The data indication is used by the access point or the central controller for the selection of the channel of the access point for communications with the mobile device. The flowchart ends at an end block 914 of FIG. 9.

The data indication communicated from the mobile device may be a channel number or other suitable identifier which identifies the particular channel to be selected. On the other hand, the data indication may indicate more generally to the access point or centralized controller to select any suitable channel within either the near side portion (e.g. '0' bit) or the far side portion (e.g. '1' bit) of the first RF band. Note that the access point or centralized controller may be configured to utilize a channel selection algorithm which receives the data indication as merely one of several considerations input into the algorithm, as a suggestion of the channel or portion of the first RF band to be selected. For example, the channel to be selected may be one in which the received signal strength is above an acceptable level of signal strength (e.g. RSSI). Thus, channel selection is performed using a technique which reduces interference, but also adequately distributes use of the channels as appropriate.

Thus, techniques for reducing RF interference of communications with a first wireless network of a first type (e.g. WLAN or IEEE 802.11 technology) due to simultaneous communications with a second wireless network of a second type (e.g. LTE technology) have been described. For each access point in the first network of the first type, a mobile device identifies a frame error rate of communications. The frame error rate is measured while simultaneously communicating with the second network of the second type. The mobile device stores the frame error rate in association with an access point identifier of the access point. Upon encountering the first network again, the mobile device prioritizes the selection of an access point based on a ranking of the access points according to their associated frame error rates from lowest to highest. Further, the mobile device may use adjusted hysteresis parameters for making a handover decision in order to reduce a "ping-pong" selection between access points.

Additional or alternative techniques are used in channel selection in the same or similar environment. Communications in the first wireless network of the first type (e.g. WLAN or 802.11 technology) are made within a first RF band, and communications in the second wireless network of the second type (e.g. LTE technology) are in a second RF band which is adjacent the first RF band. The first RF band may be characterized as having a near side portion and a far side portion, where the near side portion is closer in frequency to the second RF band than the far side portion. The mobile device identifies a signal strength of a received signal from the second wireless network of the second type. The signal strength may correlate to a transmit power of signals transmitted from the mobile device to the second wireless network (e.g. the signal strength may be inversely proportional to the transmit power). When the signal strength of the received signal is less than a low threshold, the mobile device provides a data indication to select an RF channel of the access point that is located in the far side portion of the first RF band. When the signal strength of the received signal is greater than a high threshold, the mobile device provides a data indication to select an RF channel of the access point that is located in the near side portion of the first RF band. The mobile device sends the data indication to the access point or first wireless network, for its selection of an RF channel of the access point for communications with the mobile device.

The above-described embodiments of the present disclosure are intended to be examples only. Those of skill in the art may affect alterations, modifications and variations to the particular embodiments without departing from the scope of the application. Although the description relates to specific examples for illustration, where the WLAN is an IEEE 802.11-based network, for example, different environments may be applicable as well. As a few other examples, the wireless networking may be based on a WiMAX network (i.e. IEEE 802.16), or an Ultra-WideBand (UWB) network (i.e. IEEE 802.15). The invention described herein in the recited claims intends to cover and embrace all suitable changes in technology.

## Claims

1. A method for a mobile communication device for reducing interference in communication with a first wireless network of a first type due to simultaneous communication with a second wireless network of a second type, the method comprising:
for each one of a plurality of access points in the first wireless network:
identifying a frame error rate for communication via each one of said plurality of access points of the first wireless network, the frame error rate being measured during communication with the second wireless network of the second type, **characterized in that** it further comprises:
storing the frame error rate in association with an access point identifier of each one of said plurality of access points and
upon encountering the first wireless network again, prioritizing selection of one of said plurality of access points of the first wireless network for communication based on a ranking of the plurality of access points according to their associated frame error rates from lowest to highest.

2. The method of claim 1, further comprising:
selecting one of said plurality of access points for communication based on the prioritized selection; and
adjusting hysteresis parameters used for making a handover decision for communication with the selected access point.

3. The method of claim 2, wherein the adjusted hysteresis parameters are lowered to avoid occurrence of a ping-pong selection between the selected access point and the rest of the plurality of access points in the first wireless network by the mobile device.

4. The method of any one of claims 1-3, wherein prioritizing selection of one of the plurality of access points further comprises prioritizing selection of one of said plurality of access points associated with the lowest frame error rate over any other of the plurality of access points of the first wireless network.

5. The method of any one of claims 1-4, wherein prioritizing selection of one of the plurality of access points further comprises prioritizing selection of one of the plurality of access points associated with the lowest frame error rate over all other access points of the plurality of access points in the first wireless network if a received signal strength of the selected access point is greater than a signal strength threshold.

6. The method of any one of claims 2 to 5, wherein communication in the first wireless network is within a first radio frequency, RF, band and communication in the second wireless network is within a second RF band adjacent to the first RF band, and the first RF band may be characterized to have a near side portion and a far side portion, the near side portion being closer in frequency to the second RF band than the far side portion, the method further comprising:
identifying a signal strength of a received signal from the second wireless network of the second type;
when the signal strength of the received signal is less than a low threshold, providing a data indication for selection of an RF channel that is located in the far side portion of the first RF band; and
sending the indication to the selected access point of the plurality of access points of the wireless network for selection of an RF channel of said access point for communications with the mobile communication device.

7. The method of any one of claims 2 to 5 wherein communication in the first wireless network is within a first radio frequency, RF, band and communication in the second wireless network is within a second RF band adjacent the first RF band, and the first RF band may be **characterized by** a near side portion and a far side portion, the near side portion being closer in frequency to the second RF band than the far side portion, the method further comprising:
identifying a signal strength of a received signal from the second wireless network of the second type;
when the signal strength of the received signal is greater than a high threshold, providing a data indication for selection of an RF channel that is located in the near side portion of the first RF band; and
sending the data indication to the selected access point of the plurality of access points of the wireless network for selection of an RF channel of said access point for communications with the mobile communication device.

8. The method of any one of claims 1-7, wherein the first type of first wireless network comprises a wireless local area network, WLAN.

9. The method of any one of claims 1-8, wherein the second type of second wireless network comprises a Long Term Evolution, LTE, network.

10. A mobile communication device, comprising:
one or more processors;
a memory coupled to the one or more processors;
a first radio frequency , RF; transceiver configured to communicate in a first RF band with a first wireless network of a first type;
a second RF transceiver configured to communicate in a second RF band with a second wireless network of a second type;
the one or more processors being configured to execute the method of any one of claims 1 to 9.

## Patentansprüche

1. Verfahren für eine Mobilkommunikationsvorrichtung zum Vermindern von Interferenz in Kommunikation mit einem ersten Drahtlosnetz eines ersten Typs aufgrund gleichzeitiger Kommunikation mit einem zweiten Drahtlosnetz eines zweiten Typs, wobei das Verfahren Folgendes aufweist:
für jeden einer Vielzahl von Zugangspunkten in dem ersten Drahtlosnetz:
Identifizieren einer Rahmenfehlerrate für eine Kommunikation über jeden der Vielzahl von Zugangspunkten des ersten Drahtlosnetzes, wobei die Rahmenfehlerrate während einer Kommunikation mit dem zweiten Drahtlosnetz des zweiten Typs gemessen wird, **dadurch gekennzeichnet, dass** es ferner Folgendes aufweist:
Speichern der Rahmenfehlerrate in Verknüpfung mit einem Zugangspunktidentifikator jedes der Vielzahl von Zugangspunkten und
Priorisieren einer Auswahl eines der Vielzahl von Zugangspunkten des ersten Drahtlosnetzes nach erneutem Antreffen des ersten Drahtlosnetzes zur Kommunikation auf Grundlage einer Rangfolge der Vielzahl von Zugangspunkten nach deren verknüpften Rahmenfehlerraten von der niedrigsten zur höchsten.

2. Verfahren nach Anspruch 1, ferner mit:
Auswählen eines der Vielzahl von Zugangspunkten zur Kommunikation auf Grundlage der priorisierten Auswahl und
Justieren von Hystereseparametern, die dazu verwendet werden, eine Übergabeentscheidung für eine Kommunikation mit dem ausgewählten Zugangspunkt zu treffen.

3. Verfahren nach Anspruch 2, wobei die justierten Hystereseparameter gesenkt werden, um ein Auftreten einer Ping-Pong-Auswahl zwischen dem ausgewählten Zugangspunkt und dem Rest der Vielzahl von Zugangspunkten in dem ersten Drahtlosnetz durch die Mobilvorrichtung zu vermeiden.

4. Verfahren nach einem der Ansprüche 1 bis 3, wobei das Priorisieren einer Auswahl eines der Vielzahl von Zugangspunkten ferner ein Priorisieren einer Auswahl eines der Vielzahl von Zugangspunkten, der mit der niedrigsten Rahmenfehlerrate verknüpft ist, gegenüber einem beliebigen anderen der Vielzahl von Zugangspunkten des ersten Drahtlosnetzes aufweist.

5. Verfahren nach einem der Ansprüche 1 bis 4, wobei das Priorisieren einer Auswahl eines der Vielzahl von Zugangspunkten ferner ein Priorisieren einer Auswahl eines der Vielzahl von Zugangspunkten, der mit der niedrigsten Rahmenfehlerrate verknüpft ist, gegenüber allen anderen Zugangspunkten der Vielzahl von Zugangspunkten in dem ersten Drahtlosnetz aufweist, wenn eine empfangene Signalstärke des ausgewählten Zugangspunkts größer als ein Signalstärkeschwellenwert ist.

6. Verfahren nach einem der Ansprüche 2 bis 5, wobei die Kommunikation in dem ersten Drahtlosnetz in einem ersten Funkfrequenz- bzw. Hochfrequenz-, HF-, Band ist und Kommunikation in dem zweiten Drahtlosnetz in einem zweiten HF-Band ist, das an das erste HF-Band angrenzt, und das erste HF-Band **dadurch gekennzeichnet** werden kann, dass es einen Nahseitenteil und einen Fernseitenteil aufweist, wobei der Nahseitenteil in Bezug auf Frequenz näher an dem zweiten HF-Band als der Fernseitenteil ist, wobei das Verfahren ferner Folgendes aufweist:
Identifizieren einer Signalstärke eines empfangenen Signals von dem zweiten Drahtlosnetz des zweiten Typs,
Bereitstellen einer Datenangabe zur Auswahl eines HF-Kanals, wenn die Signalstärke des empfangenen Signals weniger als ein niedriger Schwellenwert ist, wobei sich der HF-Kanal in dem Fernseitenteil des ersten HF-Bands befindet, und
Senden der Datenangabe an den ausgewählten Zugangspunkt der Vielzahl von Zugangspunkten des Drahtlosnetzes für eine Auswahl eines HF-Kanals des Zugangspunktes für Kommunikationen mit der Mobilkommunikationsvorrichtung.

7. Verfahren nach einem der Ansprüche 2 bis 5,
wobei die Kommunikation in dem ersten Drahtlosnetz in einem ersten Funkfrequenz- bzw. Hochfrequenz-, HF-, Band ist und und Kommunikation in dem zweiten Drahtlosnetz in einem zweiten HF-Band ist, das an das erste HF-Band angrenzt, und das erste HF-Band durch einen Nahseitenteil und einen Fernseitenteil gekennzeichnet werden kann, wobei der Nahseitenteil in Bezug auf Frequenz näher an dem zweiten HF-Band als der Fernseitenteil ist, wobei das Verfahren ferner Folgendes aufweist:
Identifizieren einer Signalstärke eines empfangenen Signals von dem zweiten Drahtlosnetz des zweiten Typs,
Bereitstellen einer Datenangabe zur Auswahl eines HF-Kanals, wenn die Signalstärke des empfangenen Signals höher als ein hoher Schwellenwert ist, wobei sich der HF-Kanal in dem Nahseitenteil des ersten HF-Bands befindet, und
Senden der Datenangabe an den ausgewählten Zugangspunkt der Vielzahl von Zugangspunkten des Drahtlosnetzes für eine Auswahl eines HF-Kanals des Zugangspunktes für Kommunikationen mit der Mobilkommunikationsvorrichtung.

8. Verfahren nach einem der Ansprüche 1 bis 7, wobei der erste Typ von erstem Drahtlosnetz ein lokales Drahtlosnetz, "Wireless Local Area Network", WLAN aufweist.

9. Verfahren nach einem der Ansprüche 1 bis 8, wobei der zweite Typ des zweiten Drahtlosnetzes ein Long-Term-Evolution-, LTE-, Netz aufweist.

10. Mobilkommunikationsvorrichtung mit:
einem oder mehreren Prozessoren,
einem Speicher, der an den einen oder die mehreren Prozessoren gekoppelt ist,
einem ersten Funkfrequenz- bzw. Hochfrequenz-, HF-, Sendeempfänger, der dazu konfiguriert ist, in einem ersten HF-Band mit einem ersten Drahtlosnetz eines ersten Typs zu kommunizieren,
einem zweiten HF-Sendeempfänger, der dazu konfiguriert ist, in einem zweiten HF-Band mit einem zweiten Drahtlosnetz eines zweiten Typs zu kommunizieren,
wobei der eine oder die mehreren Prozessoren dazu konfiguriert sind, das Verfahren nach einem der Ansprüche 1 bis 9 durchzuführen.

## Revendications

1. Procédé exécuté par un dispositif de communication mobile afin de réduire les interférences dans une communication avec un premier réseau sans fil d'un premier type en raison d'une communication simultanée avec un second réseau sans fil d'un second type, le procédé comprenant les étapes consistant à :
pour chaque point parmi une pluralité de points d'accès du premier réseau sans fil, identifier un taux d'erreur sur trames pour la communication avec chaque point parmi ladite pluralité de points d'accès du premier réseau sans fil, le taux d'erreur sur trames étant mesuré pendant la communication avec le second réseau sans fil du second type ;
**caractérisé en ce qu'**il comprend en outre les étapes consistant à :
enregistrer le taux d'erreur sur trames en association avec un identificateur de point d'accès pour chacun des points de ladite pluralité de points d'accès ; et
après avoir retrouvé le premier réseau sans fil, classer par priorité la sélection des points parmi ladite pluralité de points d'accès du premier réseau sans fil pour la communication, en fonction du classement de la pluralité de points d'accès d'après leurs taux d'erreur sur trames associés, classés du plus bas au plus élevé.

2. Procédé selon la revendication 1, comprenant en outre les étapes consistant à :
sélectionner pour la communication un point parmi ladite pluralité de points d'accès en fonction du classement par priorité ; et
ajuster des paramètres d'hystérésis utilisés pour prendre une décision de transfert pour la communication avec le point d'accès sélectionné.

3. Procédé selon la revendication 2, dans lequel les paramètres d'hystérésis ajustés sont abaissés pour éviter que se produise un mécanisme de sélection en ping-pong entre le point d'accès sélectionné et le reste de la pluralité de points d'accès du premier réseau sans fil par le dispositif mobile.

4. Procédé selon l'une quelconque des revendications 1 à 3, dans lequel l'étape de classement par priorité de la sélection d'un point parmi la pluralité de points d'accès comprend en outre l'étape consistant à classer par priorité la sélection d'un point parmi la pluralité de points d'accès qui est associé au taux d'erreur sur trames le plus faible par rapport à tous les autres points parmi la pluralité de points d'accès du premier réseau sans fil.

5. Procédé selon l'une quelconque des revendications 1 à 4, dans lequel l'étape de classement par priorité de la sélection d'un point parmi la pluralité de points d'accès comprend en outre l'étape consistant à classer par priorité la sélection d'un point parmi la pluralité de points d'accès qui est associé au taux d'erreur sur trames le plus faible par rapport à tous les autres points parmi la pluralité de points d'accès du premier réseau sans fil si l'intensité du signal reçu du point d'accès sélectionné est supérieure à un seuil d'intensité du signal.

6. Procédé selon l'une quelconque des revendications 2 à 5, dans lequel la communication sur le premier réseau sans fil s'effectue sur une première bande de radiofréquences et la communication sur le second réseau sans fil s'effectue sur une seconde bande de radiofréquences adjacente à la première bande de radiofréquences et la première bande de radiofréquences peut être caractérisée comme ayant une partie latérale proche et une partie latérale distante, la partie latérale proche étant plus proche en fréquence de la seconde bande de radiofréquences que la partie latérale distante, le procédé comprenant en outre les étapes consistant à :
identifier une intensité du signal pour un signal reçu du second réseau sans fil du second type ;
si l'intensité du signal reçu est inférieure à un seuil bas, fournir une indication de données pour la sélection d'un canal de radiofréquences qui est situé dans la partie latérale distante de la première bande de radiofréquences ; et
envoyer l'indication au point d'accès sélectionné parmi la pluralité de points d'accès du réseau sans fil pour la sélection d'un canal de radiofréquences dudit point d'accès pour les communications avec le dispositif de communication mobile.

7. Procédé selon l'une quelconque des revendications 2 à 5, dans lequel la communication sur le premier réseau sans fil s'effectue sur une première bande de radiofréquences et la communication sur le second réseau sans fil s'effectue sur une seconde bande de radiofréquences adjacente à la première bande de radiofréquences et la première bande de radiofréquences peut être caractérisée comme ayant une partie latérale proche et une partie latérale distante, la partie latérale proche étant plus proche en fréquence de la seconde bande de radiofréquences que la partie latérale distante, le procédé comprenant en outre les étapes consistant à :
identifier une intensité du signal pour un signal reçu du second réseau sans fil du second type ;
si l'intensité du signal reçu est supérieure à un seuil haut, fournir une indication de données pour la sélection d'un canal de radiofréquences qui est situé dans la partie latérale proche de la première bande de radiofréquences ; et
envoyer l'indication au point d'accès sélectionné parmi la pluralité de points d'accès du réseau sans fil pour la sélection d'un canal de radiofréquences dudit point d'accès pour les communications avec le dispositif de communication mobile.

8. Procédé selon l'une quelconque des revendications 1 à 7, dans lequel le premier type du premier réseau sans fil est un réseau local sans fil.

9. Procédé selon l'une quelconque des revendications 1 à 8, dans lequel le second type du second réseau sans fil est un réseau de type évolution à long terme, LTE pour « *Long Terme Evolution ».*

10. Dispositif de communication mobile comprenant :
un ou plusieurs processeurs ;
une mémoire couplée auxdits un ou plusieurs processeurs ;
un premier émetteur-récepteur de radiofréquences configuré pour communiquer sur une première bande de radiofréquences avec un premier réseau sans fil d'un premier type ;
un second émetteur-récepteur de radiofréquences configuré pour communiquer sur une seconde bande de radiofréquences avec un second réseau sans fil d'un second type ;
lesdits un ou plusieurs processeurs étant configurés pour exécuter le procédé selon l'une quelconque des revendications 1 à 9.
